# EUROPÄISCHE PATENTANMELDUNG

(11) **EP 0 653 522 A2**
(43) Veröffentlichungstag der Anmeldung: **17.05.1995**
(21) Anmeldenummer: 94117790.9
(22) Anmeldetag: 10.11.1994
(51) Int. Cl.: E03D 5/01, E03D 5/00, B63B 29/14, B60R 15/00

(54) **Tragbare Toilette, insbesondere für Boote, Wohnwagen oder Reisemobile**

(30) Priorität: 16.11.1993 DE 9317559 U
(71) Anmelder: CAMPING GAZ INTERNATIONAL (DEUTSCHLAND) GMBH, D-65795 Hattersheim (DE)
(72) Erfinder: Baumgartner, Heinz, D-76275 Ettlingen (DE)
(74) Vertreter: Kern, Wolfgang, Dipl.-Ing.

(57) **Zusammenfassung**

Die Erfindung betrifft eine tragbare Toilette, insbesondere für Boote, Wohnwagen oder Reisemobile mit einem eine Abflußöffnung aufweisenden Aufnahmebehälter, einem beckenförmigen, eine Abflußöffnung aufweisenden Sitzteil und mit einer bügelartigen Verschlußeinrichtung zum lösbaren Befestigen des Sitzteils auf dem Aufnahmebehälter mittels eines schwenkbaren Verbindungskörpers derart, daß die Abflußöffnung mit der Einlaßöffnung fluchtet.

Zur Verbesserung der Verschlußeinrichtung sowie zur Erzielung einer ästhetisch ansprechenden Gestaltung ist die Verschlußeinrichtung (5) vollständig aus Kunststoff gefertigt und weist eine am Aufnahmebehälter (2) einhakbare Schließplatte (6) auf, an der der Verbindungskörper (7) ebenso wie an dem Sitzteil (3) einrastbar ist.

## Beschreibung

Die Erfindung bezieht sich auf eine tragbare Toilette, insbesondere für Boote, Wohnwagen oder Reisemobile, nach dem Oberbegriff des Anspruchs 1.

Eine solche Toilette ist aus der Praxis bekannt. Bei dieser Toilette besteht die bügelartige Verschlußeinrichtung aus einem metallischen Element, das an seinem zum Aufnahmebehälter weisenden Ende hakenförmig umgebogen ist. Das metallische Element ist mit seinem oberen Ende in eine an dem Verbindungskörper ausgebildete Durchgangsbohrung eingesetzt und dort drehbar gelagert. Der Verbindungskörper ist aus Kunststoff gefertigt. Das gegenüberliegende Ende des Verbindungskörpers ist mittels einer metallischen Schwenkachse drehbar mit dem Sitzteil verbunden. Das metallische Element ist in Form eines Drahtbügels ausgebildet. Das Herstellen einer solchen Verschlußeinrichtung ist mit einem erhöhten Aufwand verbunden. An dem Verbindungskörper und am Sitzteil sind Durchgangsbohrungen auszubilden, deren Durchmesser innerhalb eines bestimmten engen Toleranzbereiches liegen, damit die metallischen Achsen ohne Spiel darin befestigt werden können. Der optische Gesamteindruck der Verschlußeinrichtung ist durch die verwendeten Kunststoff- und Metallteile uneinheitlich. Der metallische Drahtbügel ist ein relativ aufwendig herzustellendes Biegeteil.

Der Erfindung liegt die Aufgabe zugrunde, eine tragbare Toilette der eingangs angegebenen Art zu schaffen, deren Verschlußeinrichtung wirtschaftlicher herstellbar und ästhetisch ansprechender gestaltet ist.

Diese Aufgabe wird durch eine tragbare Toilette mit den Merkmalen des Anspruchs 1 gelöst.

Da die gesamte Verschlußeinrichtung aus Kunststoff gefertigt ist, ergibt sich für die erfindungsgemäße Verschlußeinrichtung ein einheitlicher optischer Gesamteindruck. Dieser wird noch durch die Schließplatte unterstützt, hinter der die anderen Elemente der Verschlußeinrichtung angeordnet werden können, so daß letztere von außen betrachtet nicht sichtbar sind. Dadurch entsteht eine einheitliche, in sich abgeschlossene, ästhetisch ansprechende Verschlußeinrichtung. Beim Einrasten des Verbindungskörpers sowohl an der Schließplatte als auch am Sitzteil kann die Elastizität des verwendeten Materials ausgenutzt werden, so daß weniger strenge Toleranzbereiche als bei der Verschlußeinrichtung der bekannten Toilette erhalten sind. Eine spezielle Befestigung von Schwenkachsen in Durchtrittsbohrungen ist nicht erforderlich. Damit ist die erfindungsgemäße Verschlußeinrichtung mit geringem Aufwand und damit kostengünstig herstellbar. Im übrigen gewährleistet die Rastverbindung zwischen Verbindungskörper und Schließplatte sowie Sitzteil auch ein unproblematisches Lösen dieser Elemente voneinander, so daß die einzelnen Teile schnell ausgetauscht werden können.

Vorteilhaft ist ferner, daß die Schließplatte an ihrem einen Ende wenigstens einen Haken zum Hintergreifen eines am Aufnahmebehälter vorgesehenen Wulstes und an ihrem gegenüberliegenden anderen Ende wenigstens ein Gabelelement zur Aufnahme des einen Endes des Verbindungskörpers aufweist und daß der wenigstens eine Haken und das wenigstens eine Gabelelement einstückig mit der im montierten Zustand zur Toilette weisenden Rückwand der Schließplatte verbunden sind. Damit befinden sich die für die Funktion wesentlichen Teile der Schließplatte an ihrer Rückwand. Sie sind also von außen betrachtet nicht sichtbar. Dadurch wird der ästhetische Gesamteindruck der Verschlußeinrichtung sowie der gesamten Toilette weiter verbessert. Haken und Gabelelement sind ohne großen Aufwand an der Schließplatte vorzusehen, die vorzugsweise als Spritzteil ausgebildet ist.

Gemäß einer Weiterbildung des Erfindungsgegenstandes ist am Sitzteil zumindest ein weiteres Gabelelement zur Aufnahme des anderen Endes des Verbindungskörpers vorgesehen, das in der Sitzteil und Aufnahmekörper miteinander verbindenden Arbeitsstellung der Versclußeinrichtung zwischen dem wenigsens einen Gabelelement der Schließplatte und deren wenigstens einen Haken angeordnet ist. Damit ist zumindest in der Arbeitsstellung der Verschlußeinrichtung auch das weitere, am Sitzteil vorgesehene Gabelelement nicht sichtbar. Die Anordnung des weiteren Gabelelements zwischen dem Gabelelement der Schließplatte und deren einen Haken ermöglicht eine günstige Kraftübertragung von der Schließplatte über den Verbindungskörper zum Sitzteil, so daß die Schließplatte letztlich als eine Art Kippelement ausgebildet ist.

Gemäß einer anderen Weiterbildung des Erfindungsgegenstandes sind die Gabelelemente teilzylinderförmig ausgebildet und die Enden des Verbindungskörpers darin jeweils unter Überwindung eines Druckpunktes einrastbar und schwenkbar gelagert. Diese Ausbildung ermöglicht ein schnelles, unkompliziertes gegenseitiges Verbinden von Schließplatte, Verbindungskörper und Sitzteil sowie ein ebensolches gegenseitiges Lösen der Teile voneinander. Die Enden des Verbindungskörpers sind in den einzelnen Gabelelementen vornehmlich durch die Elastizität des verwendeten Materials gehalten, welches derartige Festigkeitswerte aufweist, daß der Verbindungskörper auch dann sicher in den Gabelelementen gehalten ist, wenn erhöhte Kräfte zum Überführen der Verschlußeinrichtung in ihre Arbeitsstellung zu überwinden sind. Vorzugsweise sind die Gabelelemente deshalb so ausgebildet, daß sich ihre Einlässe für die Enden des Verbindungskörpers quer oder entgegengesetzt zur aufzunehmenden resultierenden Kraftkomponente öffnen. In diesem Fall ist eine sichere Kraftübertragung von der Schließplatte über den Verbindungskörper zum Sitzteil sichergestellt, ohne daß es zu einem Herausgleiten des Verbindungskörpers aus den Gabelelementen kommen kann. Durch die Druckpunkte ist der Verbindungskörper sicher in den Gabelelementen gehalten.

Vorteilhafterweise hat der Verbindungskörper zwei voneinander beabstandete, parallele, zylindrische Achsen, die über wenigstens einen Steg miteinander verbunden sind und jeweils wenigstens einen umlaufenden Vorsprung aufweisen, wobei der Außendurchmesser jeder Achse geringfügig kleiner und der Außendurchmesser jedes Vorsprungs größer als der Teilinnendurchmesser der Gabelelemente ist. Durch die Ausbildung des Verbindungskörpers mit mehreren Achsen ist eine einfache Möglichkeit geschaffen, diese auch an mehreren nebeneinanderliegenden Gabelelementen einzurasten. Der jeweils vorgesehene Vorsprung verhindert ein unerwünschtes axiales Herausgleiten der Achsen aus den Gabelementen. Ein derart aufgebauter Verbindungskörper ist ohne großen Aufwand als Spritzteil herstellbar.

Gemäß einer bevorzugten Weiterbildung der Erfindung ist die Schließplatte nach ihrem Einhaken am Aufnahmebehälter unter Überwindung der oberen Totpunktlage des Verbindungskörpers in ihre Sitzteile und Aufnahmebehälter miteinander verbindende Arbeitsstellung überführbar und liegt in dieser Stellung mit ihrer Rückwand am Gabelement des Sitzteils an. Durch die Überwindung der oberen Totpunktlage ist die Schließplatte und damit die gesamte Verschlußeinrichtung sicher in ihrer Sitzteil und Aufnahmebehälter miteinander verbindenden Arbeitsstellung gehalten. Ein unbeabsichtigtes Lösen der Verschlußeinrichtung ist dadurch wirksam verhindert. Auch durch das Anliegen der Rückwand der Schließplatte am Gabelelement des Sitzteils ist die vorerwähnte Arbeitsstellung klar definiert, so daß Relativbewegungen zwischen Sitzteil und Aufnahmebehälter in dieser Stellung der Verschlußeinrichtung nahezu ausgeschlossen sind. Damit wird auch die Betriebssicherheit der erfindungsgemäßen tragbaren Toilette erhöht.

Günstig ist ferner, das zumindest eine weitere Gabelelement an der im montierten Zustand zur Schließplatte weisenden Vorderseite eines Einsatzkörpers auszubilden, der in einer seinem Querschnitt etwa entsprechenden Ausnehmung des Sitzteils befestigt ist. Damit kann auch das zumindest eine weitere Gabelelement als Kunststoff-Spritzteil ausgebildet sein.

Gemäß einer bevorzugten Weiterbildung der Erfindung weist das am Einsatzkörper ausgebildete zumindest eine weitere Gabelelement im montierten Zustand der Verschlußeinrichtung eine nach oben, d.h. zum Sitzteil weisende Einlaßöffnung für den Verbindungskörper auf und ist der Einsatzkörper so weit in die Ausnehmung des Sitzteils einschiebbar, bis seine am eingeschobenen Ende vorgesehene Rastkante eine an der Oberseite der Ausnehmung vorgesehene Rastnase überwindet und diese hintergreift. Damit ist der Einsatzkörper mit seinem zumindest einen weiteren Gabelelement lösbar am Sitzteil befestigt und, sollte dies erforderlich sein, ohne weiteres gegen einen anderen Einsatzkörper austauschbar. Es ist somit auch möglich, bereits bekannte, einen Einsatzkörper aufweisende Verschlußeinrichtungen gegen die erfindungsgemäße Verschlußeinrichtung auszutauschen und dadurch in Gebrauch befindliche tragbare Toiletten nachzurüsten.

Ausführungsbeispiele des Erfindungsgegenstandes werden nachfolgend anhand der Zeichnung näher erläutert. Es zeigen:
- Fig. 1: eine teilweise geschnittene Ansicht einer tragbaren Toilette mit einer Verschlußeinrichtung;
- Fig. 2: einen Längsschnitt entlang der Linie II-II einer in Fig. 3 dargestellten Schließplatte der Verschlußeinrichtung;
- Fig. 3: eine schematische Rückansicht der Schließplatte der Verschlußeinrichtung;
- Fig. 4: eine schematische Draufsicht auf einen Verbindungskörper der Verschlußeinrichtung;
- Fig. 5: eine schematische Seitenansicht eines Einsatzkörpers der Verschlußeinrichtung;
- Fig. 6: eine schematische Vorderansicht des Einsatzkörpers der Verschlußeinrichtung; und
- Fig. 7: eine schematische Teilansicht der tragbaren Toilette mit in ihrer Arbeitsstellung
befindlicher Verschlußeinrichtung.

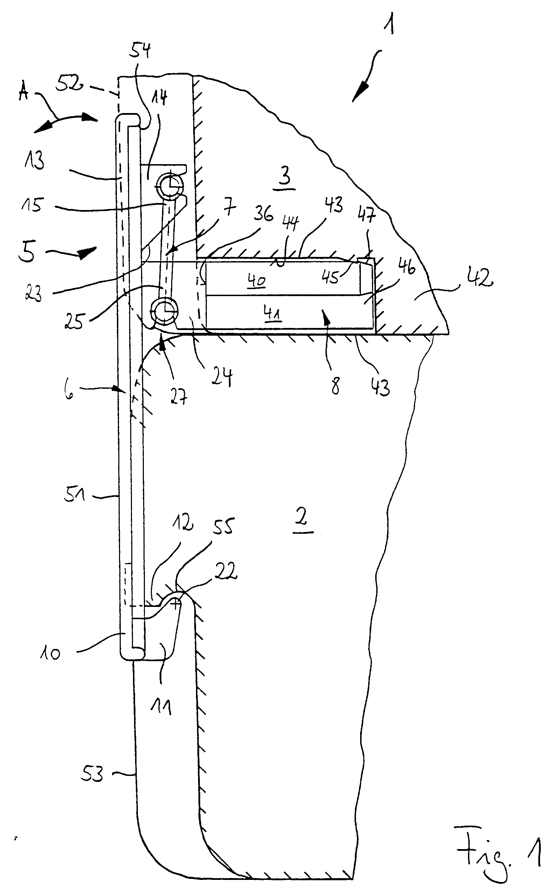

In Fig. 1 ist ein teilweiser Schnitt durch einen Teil einer tragbaren Toilette 1 schematisch dargestellt. Die tragbare Toilette 1 ist insbesondere auf Booten, in Wohnwagen oder in Reisemobilen einsetzbar. Sie hat einen eine nicht gezeigte Einlaßöffnung aufweisenden Aufnahmebehälter 2, der unterhalb eines beckenförmigen, eine nicht gezeigte Abflußöffnung aufweisenden Sitzteils 3 angeordnet ist. Der Sitzteil ist mittels eines Deckels 4 (siehe Fig. 7) abdeckbar. Üblicherweise befindet sich zwischen Sitzteil 3 und Aufnahmebehälter 2 ein nicht dargestellter Schieber zum Verschließen insbesondere der Einlaßöffnung (nicht gezeigt) des Aufnahmebehälters 2.

Die tragbare Toilette 1 weist erfindungsgemäß eine bügelartige Verschlußeinrichtung 5 zum lösbaren Befestigen des Sitzteils 3 auf dem Aufnahmebehälter 2 derart auf, daß die nicht gezeigte Abflußöffnung des Sitzteils mit der nicht gezeigten Einlaßöffnung des Aufnahmebehälters fluchtet.

Die Verschlußeinrichtung 5 ist vollständig aus Kunststoff gefertigt und umfaßt eine am Aufnahmebehälter 2 einhakbare Schließplatte 6 und einen an der Schließplatte 6 einrastbaren Verbindungskörper 7, welcher ferner an dem Sitzteil 3, insbesondere mittels eines später noch erläuterten Einsatzkörpers 8, einrastbar ist. Es wird darauf hingewiesen, daß der Verbindungskörpers 7 auch unmittelbar an dem Sitzteil 3 gelagert sein kann.

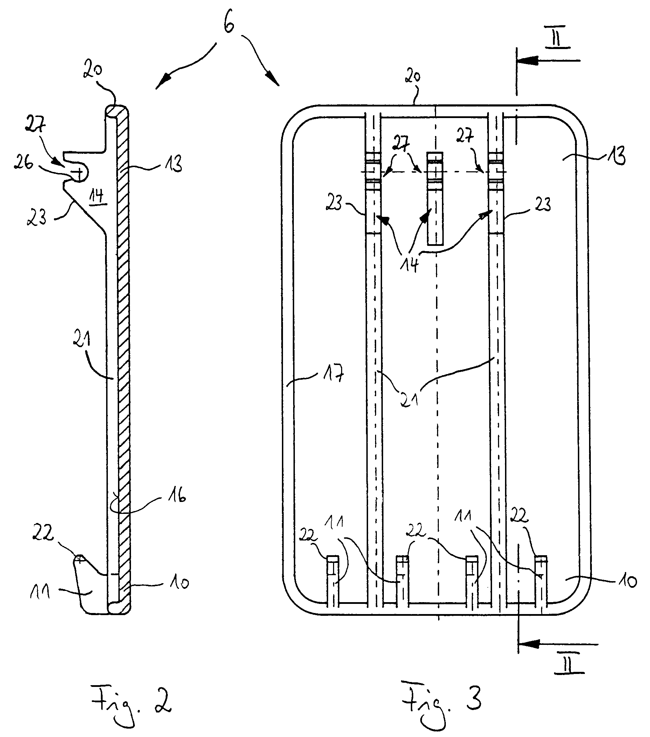

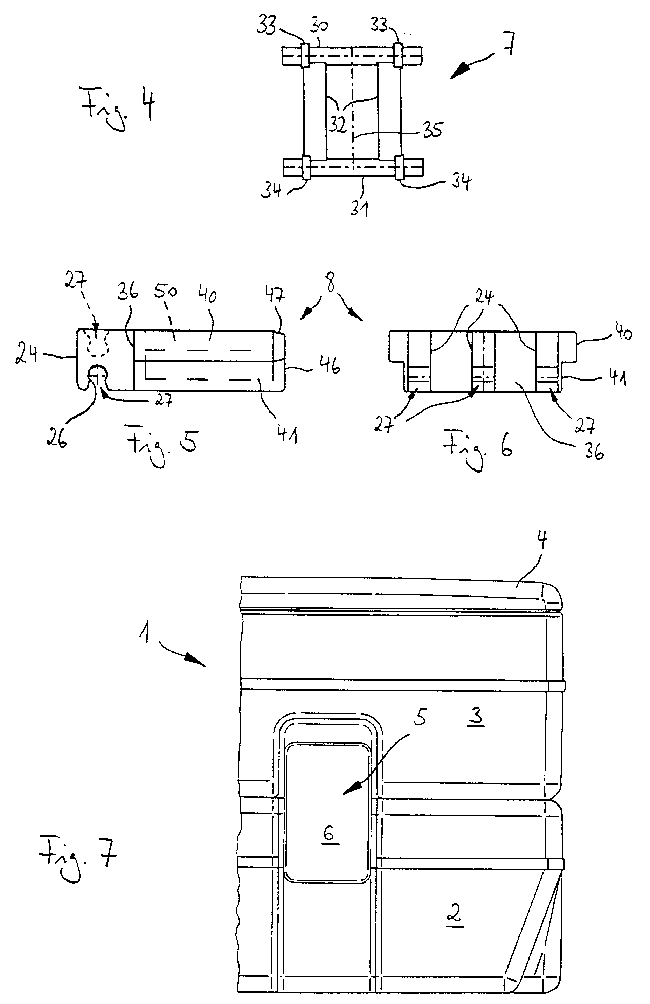

Gemäß den Fig. 1 - 3 weist die Schließplatte 6 an ihrem einen Ende 10 vier nebeneinander angeordnete Haken 11 zum Hintergreifen eines am Aufnahmebehälter 2 vorgesehenen Wulstes 12 und an ihrem gegenüberliegenden anderen Ende 13 drei Gabelelemente 14 zur Aufnahme des einen Endes 15 des Verbindungskörpers 7 auf Aus Fig. 3 ist ersichtlich, daß die Schließplatte 6 an ihrer Rückwand 16 eine umlaufende Kante 17 hat, deren obere Querseite 20 in zwei die äußeren Gabelelemente 14 tragende Längsrippen 21 mündet. Das in Fig. 3 mittlere Gabelelement 14 ist unmittelbar mit der Rückseite 16 der Schließplatte 6 verbunden. Die Haken 11 sind ebenso wie die Gabelelemente 14 einstückig mit der im montierten Zustand zum Sitzteil 3 bzw. Aufnahmebehälter 2 weisenden Rückkwand 16 der Schließplatte 6 verbunden.

Aus Fig. 3 ist ferner ersichtlich, daß am Ende 10 der Schließplatte neben jeder Längsrippe 21 jeweils ein Haken 11 angeordnet ist, wobei der Abstand der beiden inneren Haken 11 zur Längsrippe größer als der Abstand der beiden äußeren Haken zu der betreffenden Längsrippe ist. Jeder Haken weist gemäß Fig. 1 und 2 ein nach oben gebogenes Ende 22 auf.

Gemäß den Fig. 1 und 2 verläuft die Unterkante 23 jedes Gabelelements 14 unter einem Winkel von etwa 45° zur Rückwand 16 der Schließplatte 6. Dadurch sind die Gabelelemente 14 insbesondere in der Lage, in Fig. 1 nach unten, d.h. zum Aufnahmebehälter 2 gerichtete Kräfte aufzunehmen.

Drei weitere Gabelelemente 24 sind zur Aufnahme des anderen Endes 25 des Verbindungskörpers 7 am Sitzteil 3 vorgesehen. Gemäß Fig. 1 sind diese Gabelelemente 24 in der Sitzteil 3 und Aufnahmebehälter 2 miteinander verbindenden Arbeitsstellung der Verschlußeinrichtung 5 zwischen den Gabelelementen 14 der Schließplatte 6 und deren Haken 11 angeordnet.

Wie näher in den Fig. 2 und 5 zu erkennen ist, sind die Gabelelemente 14, 24 teilzylinderförmig ausgebildet. Die Enden 15, 25 des Verbindungskörpers 7 sind darin jeweils unter Überwindung eines Druckpunktes 26 einrastbar und schwenkbar gelagert. Ein solcher Druckpunkt 26 kann aufbeiden Seiten einer Einlaßöffnung 27 jedes Gabelelements 14, 24 oder auf beiden Seiten dieser Öffnung vorgesehen sein.

Gemäß Fig. 4 hat der Verbindungskörper 7 zwei voneinander beabstandete, parallele, zylindrische Achsen 30, 31, die über zwei Stege 32 miteinander verbunden sind. Jede Achse weist nahe ihren freien Enden jeweils einen umlaufenden Vorsprung 33, 34 auf, die etwa im Bereich der Stege 32 angeordnet sind. Der Außendurchmesser jeder Achse 30, 31 ist geringfügig kleiner und der Außendurchmesser jedes Vorsprungs 33, 34 größer als der Teilinnendurchmesser der Gabelelemente 14, 24. Dadurch ist sichergestellt, daß der in Fig. 4 dargestellte Verbindungskörper 7 in die Gabelelemente 14 der Schließplatte 6 und die weiteren Gabelelemente 24 einrastbar und gegen ein Herausfallen in axialer Richtung gesichert ist. Sofern an der Schließplatte 6 lediglich die beiden äußeren Gabelelemente 14 vorgesehen sind, kann der Verbindungskörper 7 anstelle der beiden Stege 32 auch lediglich einen in seiner zentralen Längsachse 35 vorgesehenen Steg aufweisen.

Gemäß den Fig. 1 sowie 5 und 6 sind die weiteren Gabelelemente 24 an der Vorderseite 36 des Einsatzkörpers 8 ausgebildet. Der Einsatzkörper 8 hat einen oberen Abschnitt 40, an den sich ein unterer, rückspringender Abschnitt 41 anschließt. Der Einsatzkörper hat also einen etwa T-förmigen Querschnitt.

Im unteren Teil 42 des Sitzteils 3 (vgl. Fig. 1) ist eine Ausnehmung 43 mit einem ebenfalls etwa T-förmigen Querschnitt vorgesehen, in die der Einsatzkörper 8 so einschiebbar ist, daß seine Gabelelemente 24 über die Ausnehmung 43 vorstehen. An der Oberseite 44 der Ausnehmung 43 ist eine Rastnase 45 vorgesehen, die von einer am eingeschobenen Ende 46 des Einsatzkörpers 8 ausgebildeten Rastkante 47 hintergriffen wird. Dazu ist im oberen Abschnitt 40 des Einsatzkörpers eine Ausnehmung 50 vorgesehen, in die die Rastnase 45 hineinragt.

Gemäß Fig. 1 und 5 haben die am Einsatzkörper 8 ausgebildeten weiteren Gabelelemente 24 eine nach unten, d.h. zum Aufnahmebehälter 2 weisende Einlaßöffnung 27 für den Verbindungskörper 7. In bezug auf die Kraftübertragung beim Schließen der Verschlußeinrichtung hat es aber Vorteile, die Einlaßöffnung 27, wie in Fig. 5 gestrichelt dargestellt, an der gegenüberliegenden oberen Seite des Einsatzkörpers, also nach oben, d.h. zum Sitzteil 3 weisend anzuordnen. Es ist klar, daß im letztgenannten Fall die Schließplatte 6 entweder länger oder der Verbindungskörper 7 kürzer als im erstgenannten Fall ausgebildet ist.

In Fig. 7 ist eine teilweise Seitenansicht der erfindungsgemäßen tragbaren Toilette 1 in verkleinerter Form gezeigt. Daraus ist ersichtlich, daß die erfindungsgemäße Verschlußeinrichtung 5 ästhetisch ansprechend gestaltet ist und zumindest in der Arbeitsstellung der Verschlußeinrichtung 5 ein einheitliches Ganzes bildet. Zusätzlich ist Fig. 1 zu entnehmen, daß die Vorderseite 51 der Schließplatte 6 etwa bündig mit der Vorderseite 52 des Sitzteils 3 sowie der Vorderseite 53 des Aufnahmebehälters 2 abschließt. Ein Hängenbleiben an der Verschlußeinrichtung 5 sowie dadurch bedingte Verletzungen oder ein dadurch bedingtes unbeabsichtigtes Öffnen der Verschlußeinrichtung oder Umstoßen der tragbaren Toilette ist damit weitgehend verhindert.

Nachfolgend wird der Zusammenbau von Sitzteil 3 und Aufnahmebehälter 2 mit Hilfe der Verschlußeinrichtung 5 näher erläutert.

Es wird davon ausgegangen, daß das Sitzteil 3 noch nicht auf den Aufnahmebehälter 2 aufgesetzt ist. Zunächst wird der Einsatzkörper 8 mit seinem Ende 46 in die Ausnehmung 43 des Sitzteils 3 so weit eingeschoben, bis die am eingeschobenen Ende 46 vorgesehen Rastkante die an der Oberseite 44 der Ausnehmung 43 vorgesehene Rastnase 45 überwindet und diese hintergreift. In dieser Stellung des Einsatzkörpers 8 stehen dessen Gabelelemente 24 aus der Ausnehmung 43 vor.

Nunmehr wird das Sitzteil 3 so auf den Aufnahmebehälter 2 aufgesetzt, daß die nicht gezeigte Abflußöffnung des Sitzteils mit der nicht gezeigten Einlaßöffnung des Aufnahmebehälters fluchtet. Die obere Kante 54 (vgl. Fig. 1) wird nun hintergriffen und in Richtung des in Fig. 1 nach links weisenden Teils des Doppelpfeils A verschwenkt, so daß die Enden 22 der Haken 11 der Schließplatte 6 den Wulst 12 des Aufnahmebehälters hintergreifen und in einem Rücksprung 55 des Aufnahmebehälters angeordnet werden können. Nach ihrem Einhaken am Aufnahmebehälter 2 ist die Schließplatte 6 unter Überwindung der oberen Totpunktlage des Verbindungskörpers 7 in ihre Sitzteil 3 und Aufnahmebehälter 2 fest miteinander verbindende Arbeitsstellung überführbar, in welcher die Rückwand 16 bzw. die Längsrippen 21 an den Gabelelementen 24 des Sitzteils bzw. des Einsatzkörpers 8 anliegen. Dabei wird die Schließplatte 6 sowie der Verbindungskörper 7 in Richtung des in Fig. 1 nach rechts gerichteten Teils des Doppelpfeils A verschwenkt.

Zum gegenseitigen Lösen von Sitzteil 3 und Aufnahmebehälter 2 wird in umgekehrter Reihenfolge vorgegangen.

In der in Fig. 1 gezeigten Arbeitsstellung der Verschlußeinrichtung 5 sind Sitzteil 3 und Aufnahmebehälter 2 fest miteinander verbunden. Die erfindungsgemäße Verschlußeinrichtung ist wirtschaftlich herstellbar und ästhetisch ansprechend gestaltet (vgl. Fig. 7).

## Patentansprüche

1. Tragbare Toilette, insbesondere für Boote, Wohnwagen oder Reisemobile,
mit einem eine Einlaßöffnung aufweisenden Aufnahmebehälter,
einem beckenförmigen, eine Abflußöffnung aufweisenden Sitzteil und
mit einer bügelartigen Verschlußeinrichtung zum lösbaren Befestigen des Sitzteils auf dem Aufnahmebehälter mittels eines schwenkbaren Verbindungskörpers derart, daß die Abflußöffnung mit der Einlaßöffnung fluchtet,
**dadurch gekennzeichnet,**
daß die Verschlußeinrichtung (5) vollständig aus Kunststoff gefertigt ist und eine am Aufnahmebehälter (2) einhakbare Schließplatte (6) aufweist, an der der Verbindungskörper (7) ebenso wie an dem Sitzteil (3) einrastbar ist.

2. Tragbare Toilette nach Anspruch 1, **dadurch gekennzeichnet,** daß die Schließplatte (6) an ihrem einen Ende (10) wenigstens einen Haken (11) zum Hintergreifen eines am Aufnahmebehälter (2) vorgesehenen Wulstes (12) und an ihrem gegenüberliegenden anderen Ende (13) wenigstens ein Gabelelement (14) zur Aufnahme des einen Endes (15) des Verbindungskörpers (7) aufweist und der wenigstens eine Haken (11) und das wenigstens eine Gabelelement (14) einstückig mit der im montierten Zustand zur Toilette (1) weisenden Rückwand (16) der Schließplatte (6) verbunden sind.

3. Tragbare Toilette nach Anspruch 2, **dadurch gekennzeichnet,** daß am Sitzteil (3) zumindest ein weiteres Gabelelement (24) zur Aufnahme des anderen Endes (25) des Verbindungskörpers (7) vorgesehen ist, das in der Sitzteil (3) und Aufnahmebehälter (2) miteinander verbindenden Arbeitsstellung der Verschlußeinrichtung (5) zwischen dem wenigstens einen Gabelelement (14) der Schließplatte (6) und deren wenigstens einen Haken (11) angeordnet ist.

4. Tragbare Toilette nach Anspruch 2 oder 3, **dadurch gekennzeichnet,** daß die Gabelelemente (14, 24) teilzylinderförmig ausgebildet sind und die Enden (15, 25) des Verbindungskörpers (7) darin jeweils unter Überwindung zumindest eines Druckpunktes (26) einrastbar und schwenkbar gelagert sind.

5. Tragbare Toilette nach Anspruch 4, **dadurch gekennzeichnet,** daß der Verbindungskörper (7) zwei voneinander beabstandete, parallele, zylindrische Achsen (30, 31) hat, die über wenigstens einen Steg (32) miteinander verbunden sind und jeweils wenigstens einen umlaufenden Vorsprung (33, 34) aufweisen, wobei der Außendurchmesser jeder Achse (30, 31) geringfügig kleiner und der Außendurchmesser jedes Vorsprungs (33, 34) größer als der Teilinnendurchmesser der Gabelelemente (14, 24) ist.

6. Tragbare Toilette nach einem der vorhergehenden Ansprüche, **dadurch gekennzeichnet,** daß die Schließplatte (6) nach ihrem Einhaken am Aufnahmebehälter (2) unter Überwindung der oberen Totpunktlage des Verbindungskörpers (7) in ihre Sitzteil (3) und Aufnahmebehälter (2) miteinander verbindende Arbeitsstellung überführbar ist und in dieser Stellung mit ihrer Rückwand (16) am Gabelelement (24) des Sitzteils (3) anliegt.

7. Tragbare Toilette zumindest nach Anspruch 3, **dadurch gekennzeichnet,** daß das zumindest eine weitere Gabelelement (24) an der im montierten Zustand zur Schließplatte (6) weisenden Vorderseite (36) eines Einsatzkörpers (8) ausgebildet ist, der in einer seinem Querschnitt etwa entsprechenden Ausnehmung (43) des Sitzteils (3) befestigt ist.

8. Tragbare Toilette nach Anspruch 7, **dadurch gekennzeichnet,** daß das am Einsatzkörper (8) ausgebildete zumindest eine weitere Gabelelement (24) im montierten Zustand der Verschlußeinrichtung (5) eine nach oben, d.h. zum Sitzteil (3), weisende Einlaßöffnung (27) für den Verbindungskörper (7) aufweist und der Einsatzkörper (8) so weit in die Ausnehmung (43) des Sitzteils (3) einschiebbar ist, bis seine am eingeschobenen Ende (46) vorgesehen Rastkante (47) eine an der Oberseite (44) der Ausnehmung (43) vorgesehene Rastnase (45) überwindet und diese hintergreift.
